# EUROPÄISCHE PATENTSCHRIFT

(11) **EP 3 049 288 B1**
(45) Veröffentlichungstag und Bekanntmachung des Hinweises auf die Patenterteilung: **16.01.2019**
(21) Anmeldenummer: 14749787.9
(22) Anmeldetag: 05.08.2014
(51) Int. Cl.: B60R 13/00, B60Q 1/26

(54) **BAUGRUPPE FÜR BETÄTIGUNG EINER FAHRZEUGFUNKTION**
ASSEMBLY FOR OPERATING A VEHICLE FUNCTION
ENSEMBLE POUR FAIRE FONCTIONNER UNE FONCTION DE VÉHICULE

(30) Priorität: 25.09.2013 DE 102013110596
(43) Veröffentlichungstag der Anmeldung: 03.08.2016
(73) Patentinhaber: Huf Hülsbeck & Fürst GmbH & Co. KG, 42551 Velbert (DE)
(72) Erfinder: SCHINDLER, Mirko, 42549 Velbert (DE); VAN GASTEL, Peter, 42699 Solingen (DE); GERDES, Bernd, 45355 Essen (DE)
(74) Vertreter: Zenz Patentanwälte Partnerschaft mbB
(86) Internationale Anmeldenummer: PCT/EP2014/066828
(87) Internationale Veröffentlichungsnummer: WO 2015/043808

(56) Entgegenhaltungen:
- DE-A1-102011 016 439
- US-A1- 2003 216 817
- US-A1- 2006 226 953
- US-A1- 2007 126 246
- US-A1- 2010 007 463

## Beschreibung

Die Erfindung betrifft eine Baugruppe zur Verwendung an einem Kraftfahrzeug. Insbesondere betrifft die Erfindung eine Baugruppe, die am Kraftfahrzeug angeordnet wird, um eine Betätigung einer Fahrzeugfunktion zu ermöglichen.

Im Stand der Technik sind zahlreiche Baugruppen für Fahrzeuge bekannt, die den unterschiedlichsten Funktionen dienen.

Eine Baugruppe ist beispielsweise aus der EP 2 067 665 A1 bekannt. Dort wird ein Herstelleremblem oder Herstellerlogo an einem Fahrzeug angebracht und mit Hilfe einer Lichtquelle und einer Lichtleiteinrichtung hinterleuchtet.

Ein weiteres hinterleuchtetes Fahrzeuglogo ist aus der DE 10 2004 024 263 A1 bekannt.

Die genannten beleuchteten Fahrzeugembleme dienen dabei ausschließlich der Verbesserung des Designs und der verbesserten Wertanmutung eines Fahrzeuges. Einen funktionalen Aspekt erfüllen sie jedoch nicht.

Aus dem Dokument US 2010/0007463 A1 ist eine Fahrzeugtürgriffanordnung mit Beleuchtung bekannt, wobei die Beleuchtung einen Griffabschnitt oder einen Umgebungsbereich des Griffes erhellt.

Die DE 102011016439 A1 beschreibt einen Fahrzeugtürgriff, dessen Griffbereich transparent ausgebildet ist und Licht von einer Beleuchtungseinrichtung aufnimmt und über seine Erstreckung abstrahlt.

In der US 2006/0226953 A1 ist ein Fahrzeugtürgriff mit einer Detektionseinrichtung offenbart, wobei eine Unterbrechung von elektromagnetischen Strahlungswegen erfasst wird.

Aus der US 2003/0216817 A1 ist die Anordnung eines Annäherungssensors in einem am Fahrzeug festgelegten Fahrzeugemblem bekannt.

Der Erfindung liegt die Aufgabe zugrunde, eine multifunktionale Baugruppe für Fahrzeuge zur Verfügung zu stellen.

Diese Aufgabe wird erfindungsgemäß gelöst durch eine Baugruppe mit den Merkmalen des Patentanspruchs 1.

Gemäß der Erfindung wird ein gestaltetes Fahrzeugemblem (oder auch Herstelleremblem) mit einer Annäherungssensorik kombiniert, um eine Baugruppe zur Betätigung einer Fahrzeugfunktion zur Verfügung zu stellen.

Dafür weist die erfindungsgemäße Baugruppe ein dem Benutzer zugewandtes oberes Deckelement auf, welches teilweise als Fahrzeugemblem ausgebildet ist. Wenn hierbei von Fahrzeugemblem die Rede ist, ist jedes beliebige Zier- oder Markenelement gemeint, welches eine optische Aufwertung oder Kennzeichnung des Fahrzeuges vornehmen soll. Unter diesem Deckelement ist erfindungsgemäß eine Lichtverteileinrichtung angeordnet. Unter der Lichtverteileinrichtung oder darin ist wiederum eine Lichtquelle angeordnet, so dass durch Lichtquelle und Lichtverteileinrichtung in ihrer kombinierten Wirkung eine Hinterleuchtung des darauf angeordneten Deckelementes erfolgt.

Schematisch ist der Aufbau bis zu diesem Punkt vergleichbar mit dem vorstehend genannten Stand der Technik, insbesondere der EP 2 067 665 A1. Dort wird als erfindungsgemäße Lichtverteileinrichtung eine Lichtleiteinrichtung mit Lichtleitflächen oder Lichtumlenkflächen verwendet. Ebenso gut kann aber eine andere Art von Lichtverteileinrichtung, beispielsweise eine mehradrige Lichtleitereinrichtung oder auch ein Diffusor Verwendung finden.

Erfindungsgemäß erschöpft sich die Funktion der Baugruppe jedoch nicht in der Hinterleuchtung eines Zierelements, sondern dient der Sensierung von Funktionsbetätigungen. Dazu ist unter der Lichtverteileinrichtung eine Platine mit einem Annäherungssensor angeordnet, wobei der Annäherungssensor zum Sensieren von Annäherungen an das hinterleuchtbare Deckelement ausgebildet und ausgerichtet ist. Der Annäherungssensor sensiert also durch die Lichtverteileinrichtung und das Deckelement hindurch eine Annäherung an das Deckelement. Der Sensor liegt auf der dem Benutzer abgewandten Seite des Deckelementes, der Benutzer sieht also das beleuchtete Deckelement und kann auf diese Weise die entsprechend sensierte Fläche problemlos auffinden. Es befinden sich nämlich Herstellerembleme oder Fahrzeugembleme oft an prominenten Stellen am Fahrzeug, so dass ein Auffinden dieser Embleme unproblematisch ist. Dies ist ein weiterer Vorteil der Erfindung, da das Betätigungselement gleichzeitig als Designelement wirkt und deshalb an bequem zugänglichen Stellen am Fahrzeug anzuordnen ist. Im Stand der Technik werden Bedienelemente oft dezent, aber an problematisch zugänglichen Stellen angeordnet, da sie das Erscheinungsbild eines Fahrzeuges schmälern können. Außerdem schützt bei der Erfindung das Deckelement den Annäherungssensor vor Umwelteinflüssen.

Mit sowohl der Lichtquelle als auch dem Annäherungssensor ist eine Steuer- und Auswerteschaltung gekoppelt, die auf der Platine unmittelbar angeordnet sein kann, ebenso jedoch au einer anderen Position der Baugruppe platziert sein kann. Diese Steuer- und Auswerteschaltung steuert den Annäherungssensor in der technisch vorgesehenen Weise an. Als Annäherungssensoren kommen sowohl kapazitive als auch induktive Annäherungssensoren in Frage. Beide Arten sind im Markt verfügbar und mit entsprechenden Schaltvorschriften versehen. Kapazitive Sensoren können außerdem durch Metallflächen gebildet werden, die mit einer geeigneten Ladeelektronik gekoppelt sind. Der Erfassungsbereich des Sensors erstreckt sich durch die davor, zum Benutzer hin ausgerichteten Komponenten und sensiert kontaktlos die Annäherung eines Benutzers.

In Abhängigkeit von der Sensierung der Annäherung ist es der Steuer- und Auswerteeinrichtung möglich, die Lichtquelle anzusteuern. Diese Ansteuerung kann in vielfältiger Weise erfolgen. Beispielsweise kann das Licht genutzt werden, um den Benutzer für eine Benutzung anzuleiten. Die Farbe der Lichtquelle kann außerdem geändert werden, um einen Betriebszustand der Einrichtung anzuzeigen. Beispielsweise kann das Fahrzeugemblem in einer ersten Farbe hinterleuchtet werden, wenn sich das Fahrzeug oder eine Klappe, welche mittels der Betätigungseinrichtung zu öffnen ist, in verriegeltem Zustand befindet. Die Farbe kann dann in Abhängigkeit von Verriegelungszustand geändert werden. Außerdem kann die Beleuchtungseinrichtung angesteuert werden, um die Annäherung des Benutzers oder Betätigung zu quittieren. Schließlich kann auch die Beleuchtungseinrichtung verwendet werden, um den Benutzer Hinweise für eine korrekte Bedienung zu geben. Nähert sich beispielsweise der Benutzer der Betätigungseinrichtung an, berührt diese ggf. sogar, so kann dies als erster Abschnitt eines Betätigungsschemas betrachtet werden. Die Steuer- und Auswerteeinrichtung erfasst diese Annäherung und das Verharren des Benutzers in der angenäherten Position. Der Benutzer lässt beispielsweise die Hand in einigen Zentimeter Entfernung vor der Betätigungseinrichtung verharren oder legt sie für einige Sekunden auf das Deckelement auf. Möchte nun der Benutzer die Fahrzeugfunktion aufrufen, so wird er durch ein Lichtsignal, hervorgerufen von der Steuer- und Auswerteeinrichtung aufgefordert, die Hand in einem bestimmten Zeitfenster wieder zu entfernen oder eine sonstige Geste, beispielsweise ein Abheben und erneutes Auflegen, auszuführen. Folgt der Benutzer dieser Vorgabe, so wird die Fahrzeugfunktion ausgelöst.

Die erfindungsgemäße Baugruppe bietet demnach eine neuartige Kombination von optischer Kennzeichnung und Betätigung. Die Baugruppe ist zu ästhetischen Zwecken verwendbar, erfüllt jedoch insbesondere den technischen Zweck in Kombination mit dem darin angeordneten Annäherungssensor. Der Annäherungssensor wiederum, kombiniert mit der Leuchtfunktion, ermöglicht einen besonders verlässlichen und benutzerfreundlichen Zugriff. Da er sich in einem Bereich des Fahrzeuges befindet, wo ein Fahrzeugemblem regelmäßig zur Kenntlichmachung zu positionieren ist, ist diese Einrichtung auch vorteilhaft zugänglich am Fahrzeug anzuordnen. Die ästhetische Wirkung ist also Schlüssel oder Rechtfertigung für eine besonders günstige Anordnung am Fahrzeug und erschließt ganz neue Bedienmöglichkeiten.

Wesentlich ist dabei, dass Annäherungssensoren ein Sensieren ohne unmittelbaren Kontakt erlauben und daher auch eine Raumüberwachung durch die vorgelagerten Komponenten hindurch ermöglicht.

In einer bevorzugten Ausgestaltung der Erfindung weist das Deckelement eine teilweise lichtdurchlässige Frontseite auf und die Lichtverteilungseinrichtung ist zum Ausleuchten der lichtdurchlässigen Bereiche des Deckelementes ausgebildet.

Grundsätzlich kann das Deckelement vollständig opak, also lichtundurchlässig ausgebildet sein. Die Lichtverteileinrichtung hinterleuchtet das Deckelement dann in einer solchen Weise, dass entlang des Umfangs des Deckelementes Licht austritt, so dass sich diese Konturlinie von der Umgebung abhebt. Das Deckelement kann jedoch besonders bevorzugt lichtdurchlässige Bereiche aufweisen, um eine noch bessere visuelle Wahrnehmung des Deckelementes und der Baugruppe mit ihrer Betätigungsfunktion zu erlauben.

In einer Weiterbildung der Erfindung sind Teilbereiche der Frontseite metallisiert, beispielsweise verchromt oder mit einem Metallüberzug versehen ausgebildet. Das Deckelement kann beispielsweise aus transparenten oder opaken Kunststoffkörpern geformt sein, die teilweise mit einem Chromüberzug versehen sind. Das Deckelement kann auch mehrteilig ausgebildet sein. Beispielsweise ist es möglich, das Deckelement mit einem verchromten Emblem zu versehen, welches auf einem transparenten oder teiltransparenten Träger angeordnet ist. Das Deckelement wird dann durch die Kombination des Trägers mit dem aufgebrachten Emblem gebildet. Die metallisierten Bereiche können dabei das Detektionsverhalten des Annäherungssensors beeinflussen. Insbesondere wenn kapazitive Sensoren als Annäherungssensoren Verwendung finden, werden metallisierte Teile des Deckelementes als Kondensatorfläche wirken. Diese Wirkung ist jedoch durchaus kalkuliert und teilweise auch gewünscht, um die Betätigung sicher zu erfassen. Außerdem ist die Verwendung von kapazitiven Sensoren ein etablierter Stand der Technik bei der Betätigung von Fahrzeugfunktionen. Es besteht weitreichende Kenntnis zum Einsatz dieser Sensoren, beispielsweise im Bereich der Keyless-Entry-Systeme, bei denen Fahrzeugtürgriffe die Annäherung eines Benutzers erfassen.

Die Lichtverteileinrichtung ist in vielfältiger Weise zu gestalten, beispielsweise durch eine einfache Kunststoffscheibe, in welche Licht aus einer Lichtquelle (beispielsweise LED) eingeleitet wird.

Die Lichtverteilung kann auch in einer Art geschehen, dass Licht an diskreten Positionen zur Durchleuchtung der Deckeinrichtung geleitet wird, beispielsweise durch einzelne oder Bündel von Lichtleitfasern. Außerdem können flächige Lichtleiteinrichtungen in Gestalt von Diffusoren oder Lichtleitscheiben mit geometrischer Ausgestaltung gebildet werden, bei denen Licht entlang von Linien oder Flächen austritt.

In einer Weiterbildung der Erfindung ist die Baugruppe mit einer zusätzlichen Schaltfunktion ausgebildet, die auch als redundante Schaltfunktion gestaltet sein kann. In dieser Gestaltung ist das Deckelement gegen die Platine bewegbar. Das Deckelement ist federnd gelagert und in einer Ruhestellung von der Platine und einem darauf angeordneten Schalter, insbes ein Mikroschalter, beabstandet. Das Deckelement mit dem Emblem kann insgesamt gegen die Platine und eine Federkraft betätigt werden, um eine Tastschaltfunktion auszuführen. Entsprechend weist also die Platine sowohl einen Annäherungssensor als auch ein Kontaktschalter auf. Der Kontaktschalter wird beim Eindrücken des Deckelementes betätigt. Die Gestaltung und Ausführung einer solchen Baugruppe ist mechanisch einfach zu realisieren, da das Deckelement selbst keine elektronischen oder elektrischen Komponenten trägt. Es stellt lediglich eine gestalterische, abdeckende Betätigungsplatte dar, durch die sowohl die Annäherungssensoren eine Annäherung sensieren als auch eine Betätigung durch Eindrücken des Betätigungselementes erlaubt wird. Auf diese Weise sind sowohl redundante Schaltfunktionen, also einheitliche Funktionsauslösungen durch Annäherung oder Betätigung möglich als auch unterschiedliche Bedienkonzepte. Der Schalter kann also denselben Funktionen zugeordnet werden wie eine Annäherungserfassung, andererseits können auch Annäherungsauswertungen anderen Betätigungsfunktionen zugeordnet werden als die Betätigung des Schalters.

Die Erfindung wird nun anhand der beiliegenden Zeichnungen näher erläutert.
Figur 1a zeigt eine erste Ausführungsform der Erfindung in einer perspektivischen Schrägansicht von vorne.
Figur 1b zeigt die Ausführungsform aus Figur 1a in einer perspektivischen Schrägansicht von hinten.
Figur 2a zeigt eine erste Explosionsdarstellung der ersten Ausführungsform.
Figur 2b zeigt eine zweite Explosionsdarstellung der ersten Ausführungsform.

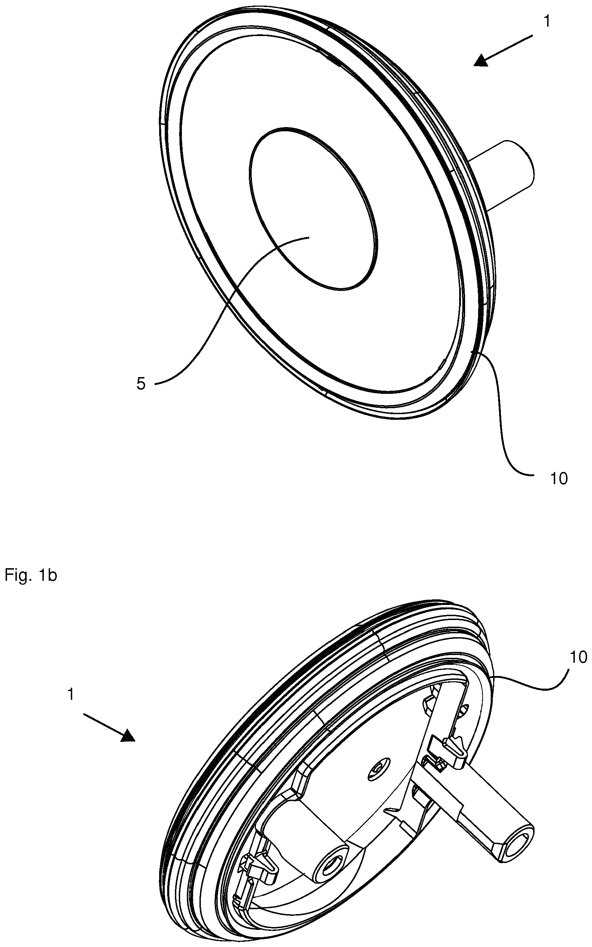

Die Figuren 1a und 1b zeigen die erfindungsgemäße Baugruppe 1 in montierter Gestaltung. Die so dargestellte Baugruppe kann in einer Ausnehmung am Fahrzeugblech, z. B. an der Heckklappe eines Fahrzeuges, montiert werden. In dieser Ausführungsform ist das Fahrzeugemblem in stilisierter Weise als zentrales Rundemblem 5 ausgebildet.

Ein tellerartiges Gehäuse 10 umschließt die verschiede Komponenten der erfindungsgemäßen Baugruppe und bietet auf der Rückseite Montagemöglichkeiten, insbesondere Clips und Öffnungen für Zuleitungen, insbesondere für Signalleitungen und Versorgungsleitungen für die Steuer- und Auswerteschaltung sowie die Annäherungssensoren und die Lichtquelle.

Die dargestellte erfindungsgemäße Baugruppe ist kompakt und umfasst die Funktionen der Annäherungserkennung, der Leuchtwirkung für das Fahrzeugemblem und einen Tastschalter.

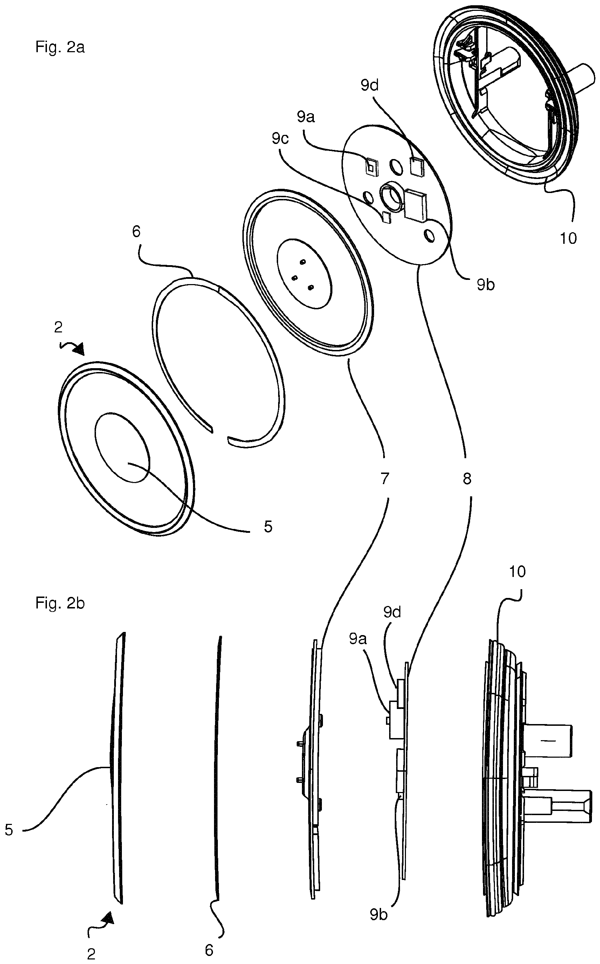

Die Figuren 2a und 2b zeigen in jeweiligen Explosionsdarstellungen den Aufbau der erfindungsgemäßen Einrichtung.

Dem Benutzer zugewandt, ist ein Deckelement 2, welches in diesem Beispiel einen runden transparenten Deckel aufweist, der im Zentrum ein chromverziertes Rundemblem 5 aufweist. In anderen Gestaltungen können komplexere Herstellerembleme verwendet werden, zur Verdeutlichung der Erfindung genügt jedoch ein einfaches Element. Das Deckelement 2 wird mit einem ringförmigen, zu beiden Seiten mit Klebstoff versehenen Klebeelement 6 auf dem Lichtleiterelement fixiert. Das Lichtleiterelement 7 weist eine ähnliche Gestaltung auf, wie das Deckelement 2 selbst, ist jedoch aus einem Lichtleitermaterial mit entsprechenden Ausformungen versehen, um eine Hinterleuchtung des zentralen Elementes 5 zu gewährleisten. Dazu weist das Lichtleiterelement 7 im zentralen Bereich eine erhabene Lichtaustrittsfläche auf, die in ihrer Kontur dem Fahrzeugemblem 5 entspricht. In diesem Bereich sind zusätzlich Lichtaustrittspunkte definiert, die für eine zusätzliche Hinterleuchtung des Chromelementes 5 sorgen. Entlang eines ringförmigen Raumes, dem Raum, der von dem verchromten Teil des Emblems 5 nicht überdeckt wird, ist außerdem eine aufgeraute Oberfläche des Lichtführungselementes ausgebildet, um eine diffuse Ausleuchtung dieses Bereiches der Deckfläche zu gewährleisten. Hinter dem Lichtleitelement 7 ist eine Platine 8 angeordnet. Diese Platine wird von der Gehäusestruktur 10 getragen, wie bereits oben unter Verweis auf die Figuren 1a und 1b gezeigt wurde. Das Gehäuse 10 dient zur Festlegung am Fahrzeug und zur sicheren Aufnahme der Platine. Außerdem stützt die Gehäusestruktur sich am Fahrzeug ab und das Deckelement 2, welches auf das Lichtleiterelement 7 verklebt ist, kann gegen die Gehäusestruktur und damit gegen die Platine 8 entgegen einer Federvorspannung bewegt werden. Die Federelemente sind in dieser Gestaltung aus Gründen der Übersichtlichkeit nicht dargestellt.

Auf der Platine 8 ist sowohl ein kapazitiver Sensor 9b angeordnet, als auch eine oberflächenmontierte LED 9c, welche die Ausleuchtung des Lichtlenkelementes 7 übernimmt. Des Weiteren ist ein Mikroschalter 9a auf der Platine angeordnet, der eine Druckbetätigung registriert, wenn sich die Bauteile der Deckplatte 2 mit dem Lichtleiter 7 gegen die Platine 8 bewegen und den Druckschalter 9a in Gestalt eines Mikroschalters auslösen. Eine Steuer- und Auswerteeinrichtung 9d ist mit den Komponenten 9a, 9b und 9c gekoppelt.

Das dargestellte Ausführungsbeispiel stellt also eine Betätigungseinrichtung zur Verfügung, welche ein Fahrzeugemblem oder Fahrzeuglogo (oder auch Herstellerlogo) hinterleuchtet und dem Benutzer eine klar lokalisierbare und einfach zu betätigende Einrichtung bietet. Der Benutzer kann sowohl eine Druckbetätigung ausführen als auch eine Annäherungsbetätigung, registriert durch den Annäherungssensor 9b. Die Steuer- und Auswerteeinrichtung 9a steuert die Lichtquelle 9c in Abhängigkeit von den Betätigungen an. Die Lichtquelle 9c kann also in Abhängigkeit von der mechanischen Betätigung angesteuert werden, die durch den Druckschalter 9a sensiert wird, und auch durch die Annäherungserkennung durch Sensor 9b. Außerdem kann die Steuer- und Auswerteschaltung 9d über die Lichtquelle 9c ein Feedback an den Benutzer geben, um ihm zum Einhalten eines bestimmten Benutzungsschemas anzuleiten. So kann der Benutzer beispielsweise angehalten sein, eine Betätigung in Gestalt einer Annäherung oder Entfernung eines Körperteils innerhalb einer Zeitspanne vorzunehmen, die durch ein Lichtsignal sichtbar gemacht wird.

Grundsätzlich können auch noch weitere Komponenten in die Betätigungseinrichtung 1 aufgenommen werden. Wesentlich ist jedoch, dass eine Deckeinrichtung mit einem Emblem vorgesehen ist und die Deckeinrichtung mit einer Lichtverteileinricht hinterleuchtbar ist, wo die Beleuchtung durch eine Steuer- und Auswertevorrichtung angesteuert wird. Die Kombination mit einem Annäherungssensor bietet dann die oben genannten Vorteile einer integrierten Betätigungseinrichtung mit einer benutzerfreundlichen Betätigungsmöglichkeit.

## Patentansprüche

1. Baugruppe (1) zur Betätigung einer Fahrzeugfunktion, mit
einem Deckelement (2), welches wenigstens teilweise als Fahrzeugemblem ausgebildet ist,
einer unter dem Deckelement (2) angeordneten Lichtverteileinrichtung (7),
einer unter oder in der Lichtverteileinrichtung angeordneten Lichtquelle (9c), wobei die Lichtquelle und die Lichtverteileinrichtung zur Hinterleuchtung des Deckelementes angeordnet sind,
**dadurch gekennzeichnet,**
**dass** unter der Lichtverteileinrichtung (7) eine Platine (8) mit einem Annäherungssensor (9b) angeordnet ist, wobei der Annäherungssensor zum Sensieren von Annäherungen an das Deckelement (2) ausgebildet und ausgerichtet ist, so dass der Annäherungssensor durch die Lichtverteileinrichtung und das Deckelement hindurch eine Annäherung an das Deckelement sensiert,
**dass** eine Steuer- und Auswerteschaltung (9d) mit der Lichtquelle (9c) und dem Annäherungssensor (9b) gekoppelt ist, um die Lichtquelle in Abhängigkeit von einer Annäherung zu schalten.

2. Baugruppe nach Anspruch 1, wobei das Deckelement eine teilweise lichtundurchlässige Frontseite aufweist und wobei die Lichtverteileinrichtung zum Ausleuchten der lichtdurchlässigen Bereiche des Deckelementes ausgebildet ist.

3. Baugruppe nach Anspruch 2, wobei die Frontseite wenigstens teilweise metallisiert, insbesondere verchromt ist.

4. Baugruppe nach einem der vorangehenden Ansprüche, wobei die Lichtverteileinrichtung Lichtleitbereiche zum Leiten und Lenken von Licht aus der Lichtquelle aufweist.

5. Baugruppe nach einem der vorangehenden Ansprüche, wobei die Lichtverteileinrichtung Diffusorbereiche zum Streuen von Licht aus der Lichtquelle aufweist.

6. Baugruppe nach einem der vorangehenden Ansprüche, wobei der Annäherungssensor als kapazitiver Sensor ausgebildet ist.

7. Baugruppe nach einem der vorangehenden Ansprüche, wobei unterhalb des Deckelements, auf der Platine ein Schalter angeordnet ist und das Deckelement gegenüber dem Schalter bewegbar angeordnet ist, so dass durch mechanische Einwirkung auf das Deckelement eine Schalterbetätigung erfolgt.

## Claims

1. An assembly (1) for operating a vehicle function, having a cover element (2) which is at least partially in the form of a vehicle emblem,
a light distribution device (7) which is arranged under the cover element (2),
a light source (9c) which is arranged under or in the light distribution device, the light source and the light distribution device being arranged to back-light the cover element,
**characterised in that**
a printed circuit board (8) having a proximity sensor (9b) is arranged under the light distribution device (7), wherein the proximity sensor is designed to sense approaches to the cover element (2) and is oriented such that the proximity sensor senses an approach to the cover element through the light distribution device and the cover element,
a control and evaluation circuit (9d) is coupled to the light source (9c) and the proximity sensor (9b) in order to switch the light source depending on an approach.

2. The assembly according to Claim 1, wherein the cover element has a partially opaque front and wherein the light distribution device is designed to illuminate the light-permeable regions of the cover element.

3. The assembly according to Claim 2, wherein the front is at least partially metallised, in particular chrome-plated.

4. The assembly according to any one of the preceding claims, wherein the light distribution device has light-guiding regions for guiding and directing light from the light source.

5. The assembly according to any one of the preceding claims, wherein the light distribution device has diffuser regions for scattering light from the light source.

6. The assembly according to any one of the preceding claims, wherein the proximity sensor is in the form of a capacitive sensor.

7. The assembly according to any one of the preceding claims, wherein a switch is arranged on the printed circuit board under the cover element, and the cover element is mounted movably relative to the switch, so that a switch operation takes place by mechanical action on the cover element.

## Revendications

1. Ensemble (1) destiné à actionner une fonction d'un véhicule, comprenant
un élément formant cache (2), lequel est conçu au moins en partie sous la forme d'un emblème du véhicule,
un système distributeur de lumière (7), placé sous l'élément formant cache (2)
une source lumineuse (9c), placée sous ou dans le système distributeur de lumière, la source lumineuse et le système distributeur de lumière étant placés pour rétro-éclairer l'élément formant cache, **caractérisé**
**en ce que** sous le système distributeur de lumière (7) est placée une carte (8) pourvue d'un capteur de proximité (9b), le capteur de proximité étant destiné à détecter les approches vers l'élément formant cache (2) et étant orienté de sorte qu'à travers le système distributeur de lumière et l'élément formant cache, le capteur de proximité détecte une approche vers l'élément formant cache,
**en ce qu'**un circuit de commande et d'évaluation (9d) est connecté sur la source lumineuse (9c) et sur le capteur de proximité (9b), pour commuter la source lumineuse en fonction d'une approche.

2. Ensemble selon la revendication 1, l'élément formant cache comportant une face frontale partiellement opaque et le système distributeur de lumière étant conçu pour éclairer les zones transparentes de l'élément formant cache.

3. Ensemble selon la revendication 2, la face frontale étant au moins partiellement métallisée, notamment chromée.

4. Ensemble selon l'une quelconque des revendications précédentes, le système distributeur de lumière comportant des zones de guidage de la lumière, destinées à guider et à diriger de la lumière hors de la source lumineuse.

5. Ensemble selon l'une quelconque des revendications précédentes, le système distributeur de lumière comportant des zones de diffusion, destinées à diffuser de la lumière hors de la source lumineuse.

6. Ensemble selon l'une quelconque des revendications précédentes, le capteur de proximité étant conçu sous la forme d'un capteur capacitif.

7. Ensemble selon l'une quelconque des revendications précédentes, sous l'élément formant cache, sur la carte étant placé un interrupteur et l'élément formant cache étant placé de manière à être mobile par rapport à l'interrupteur, de sorte que par une action mécanique sur l'élément formant cache, l'interrupteur soit actionné.
